Europäisches Patentamt

European Patent Office

Office européen des brevets

(11) Veröffentlichungsnummer: **0 007 018**
**B1**

(12) ## EUROPÄISCHE PATENTSCHRIFT

(45) Veröffentlichungstag der Patentschrift:
04.11.81

(51) Int. Cl.³: **F 16 D 23/14**

(21) Anmeldenummer: **79102019.1**

(22) Anmeldetag: **19.06.79**

(54) **Kupplungsausrücker, insbesondere für Kraftfahrzeugkupplungen.**

(30) Priorität: **15.07.78 DE 7821321 U**

(43) Veröffentlichungstag der Anmeldung:
**23.01.80 Patentblatt 80/2**

(45) Bekanntmachung des Hinweises auf die Patenterteilung:
**04.11.81 Patentblatt 81/44**

(84) Benannte Vertragsstaaten:
**FR GB IT**

(56) Entgegenhaltungen:
**DE-A1-2 611 558**
**DE-U-7 641 068**
**FR-A1-2 321 632**
**GB-A-1 477 745**

(73) Patentinhaber: **SKF KUGELLAGERFABRIKEN GMBH,**
**Ernst-Sachs-Strasse 2-8 Postfach 1440,**
**D-8720 Schweinfurt (DE)**

(72) Erfinder: **Olschewski, Armin, Stösselstrasse 8,**
**D-8720 Schweinfurt (DE)**
Erfinder: **Walter, Lothar, Harald-Hamberg-Strasse 18,**
**D-8720 Schweinfurt (DE)**
Erfinder: **Brandenstein, Mandred, Tränkgasse 57,**
**D-8781 Eussenheim (DE)**
Erfinder: **Schürger, Rainer, Ansbachring 12,**
**D-8722 Schwanfeld (DE)**
Erfinder: **Kunkel, Heinrich, Dr., Wilhelm-Leibl-Weg 16,**
**D-8720 Schweinfurt (DE)**

(74) Vertreter: **Glanz, Werner, Dipl.-Ing., Postfach 1440,**
**D-8720 Schweinfurt (DE)**

## Kupplungsausrücker, insbesondere für Kraftfahrzeugkupplungen

Die Erfindung bezieht sich auf einen Kupplungsausrücker, insbesondere für Kraftfahrzeugkupplungen, bei dem das Kupplungsdrucklager mit radialem Spiel auf einer Schiebehülse angeordnet ist, wobei der feststehende Lagerring an einem Flansch der Schiebehülse anliegt und durch separate Mittel mit der Schiebehülse verbunden ist.

Bei Kupplungsausrückern, insbesondere für Kraftfahrzeugkupplungen, ist es zweckmäßig, die Aufnahme für den Ausrückhebel elastisch auszuführen, damit Schwingungen des Ausrückhebels gedämpft werden und ein Verschleiß der Hebelaufhängung und des Hebels verringert wird.

Es ist zu diesem Zweck bekannt, z. B. eine Halteklammer mit federnden Armen anzuordnen, in die der Ausrückhebel eingeschnappt wird. Diese federnden Arme können jedoch bei starken Schwingungen abbrechen.

Hier will die Erfindung Abhilfe schaffen. Die Erfindung, wie sie in den Ansprüchen gekennzeichnet ist, löst die Aufgabe, einen Kupplungsausrücker, insbesondere für Kraftfahrzeugkupplungen, zu schaffen, bei dem das Kupplungsdrucklager mit radialem Spiel auf einer Schiebehülse angeordnet ist, wobei der feststehende Lagerring an einem Flansch der Schiebehülse anliegt und durch separate Mittel mit der Schiebehülse verbunden ist und bei dem die Halterung für den Kupplungsausrückhebel so ausgebildet ist, daß eine dauerhafte und elastische Fixierung des Kupplungshebels sichergestellt ist.

Die durch die Erfindung erreichten Vorteile sind darin zu sehen, daß ein stabiler Kupplungsausrücker geschaffen wird, an dem der Ausrückhebel durch Einschnappen leicht befestigt werden kann und bei dem der Verschleiß zwischen dem Ausrückhebel und der Aufnahme des Halteteils sehr gering ist.

In der Zeichnung ist ein Ausführungsbeispiel des Gegenstandes der vorliegenden Erfindung dargestellt.

Es zeigt

Fig. 1 einen Schnitt A–B der Fig. 2 eines Kupplungsausrückers gemäß der Erfindung mit eingesetztem Halteteil zur Aufnahme eines Ausrückhebels,

Fig. 2 eine Seitenansicht des Kupplungsausrückers gemäß Fig. 1 von links,

Fig. 3 eine Draufsicht auf den in der Fig. 1 dargestellten Kupplungsausrücker,

Fig. 4 eine Seitenansicht des Halteteils gemäß der Erfindung,

Fig. 5 das in der Fig. 4 dargestellte Halteteil im Schnitt,

Fig. 6 eine Draufsicht auf das Halteteil gemäß Fig. 4.

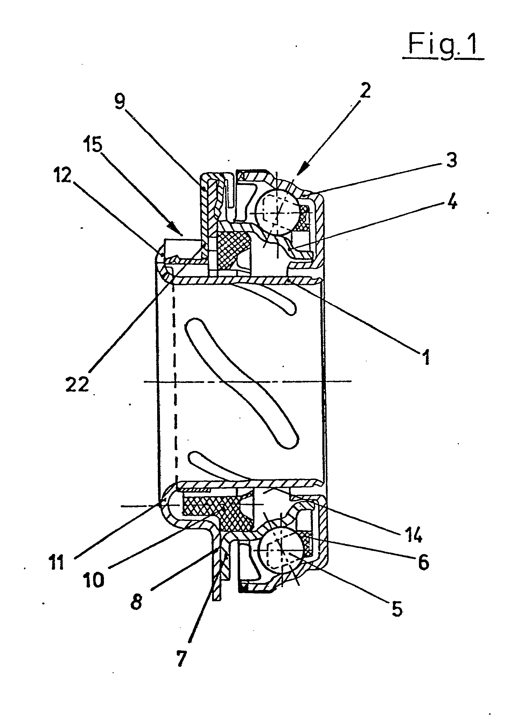

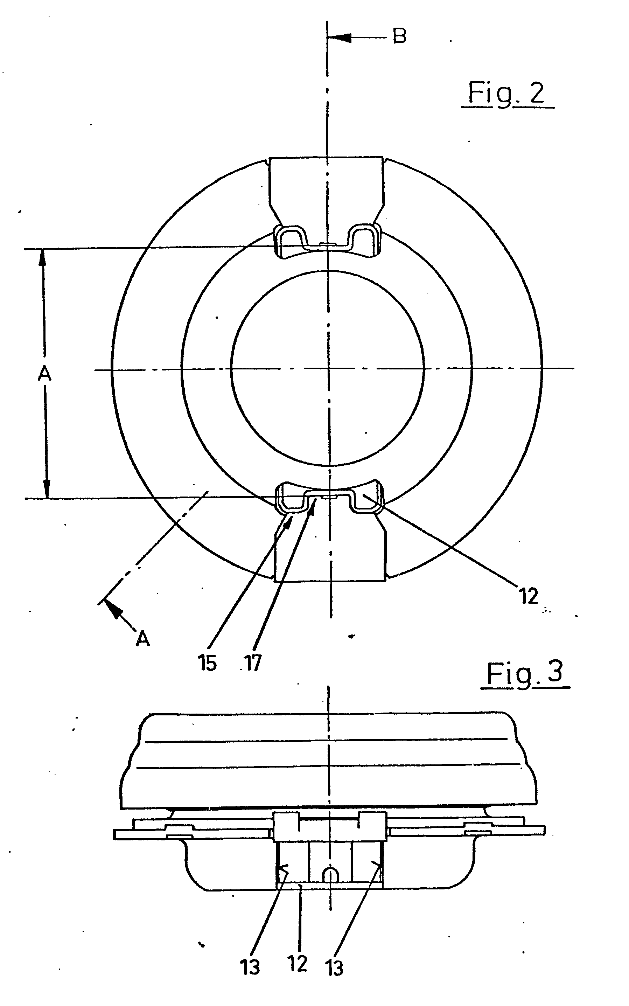

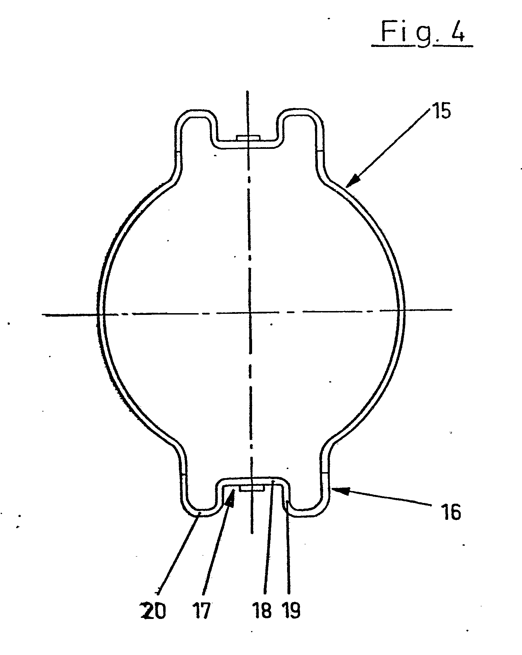

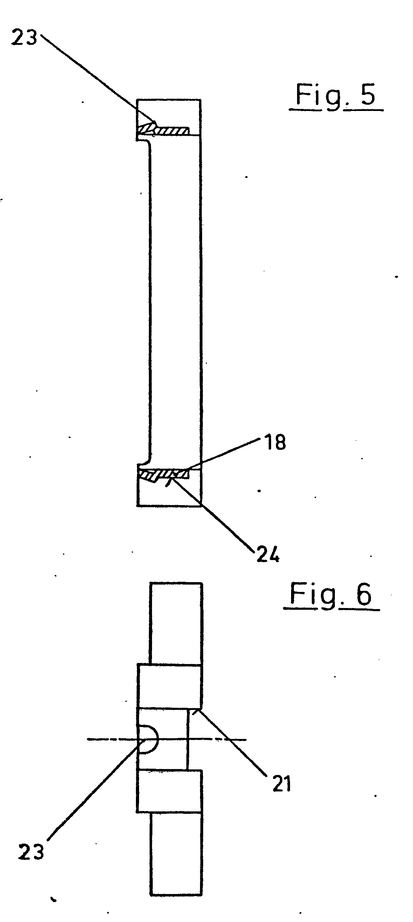

In den Fig. 1 bis 3 ist ein Kupplungsausrücker dargestellt, der aus der Schiebehülse 1 und einem selbstzentrierenden Kupplungsdrucklager 2 besteht. Das Kupplungsdrucklager 2 weist aus Blech gefertigte Lagerringe 3 und 4, Kugeln 5 und einen Käfig 6 auf. Der Innenring 4 liegt mit einem radial nach außen gerichteten Flansch 7 radial verschiebbar an einem Flansch 8 der Schiebehülse 1 an und wird durch eine Halteklammer 9 mit der Schiebehülse 1 verbunden. In der Bohrung des Innenringes 4 ist ein Ring 10 aus einem elastischen Werkstoff angeordnet, der radiale Lagerverschiebungen, z. B. bei starken Fahrbahnstößen, dämpft. Die Schiebehülse 1 ist auf der der Kupplung abgewandten Seite mit einem axial verlaufenden Wulst 11 versehen, der an der Außenseite mit mindestens zwei diametral gegenüberliegend angeordneten Öffnungen 12 mit in Achsrichtung verlaufenden parallelen Seitenwänden 13 versehen ist. Die Öffnungen 12 erstrecken sich über die gesamte Breite des Wulstes 11 und reichen bis zu seinem mittleren Durchmesser. Auf die Mantelfläche 14 der Schiebehülse 1 ist von der Kupplungsseite her ein in den Fig. 4 bis 6 gesondert dargestelltes Halteteil 15 aufgeschoben, das aus einem kreisförmig gebogenen Band mit mindestens zwei diametral gegenüberliegend angeordneten, radial nach außen gerichteten Ausbuchtungen 16 besteht. Die Ausbuchtungen 16, die im mittleren Bereich radial nach innen eingedrückt sind und Aufnahmen 17 für den Ausrückhebel (nicht gezeichnet) bilden, greifen so in die Öffnungen 12 ein, daß der Ausrückhebel von der der Kupplung abgewandten Seite in die Aufnahmen 17 eingesetzt werden kann. Die Ausbuchtungen 16 stützen sich in Umfangsrichtung außen an den parallel zueinander verlaufenden Seitenwänden 13 der Öffnungen 12 ab. Ferner sind die Bodenteile 18 und die Seitenwände 19 der Aufnahmen 17 durch Stege 20 mit dem Halteteil 15 verbunden, so daß die Aufnahmen 17 in Umfangsrichtung elastisch nachgeben können und auftretende Schwingungen gedämpft werden. Das Halteteil 15 ist auf der dem Flansch 8 der Schiebehülse 1 zugewandten Seite im Bereich der Ausbuchtungen 16 mit jeweils einer Ausnehmung 21 versehen, in die ein radial gerichteter Schenkel 22 der U-förmigen Halteklammer 9 eingreift, so daß das Halteteil 15 in einer axialen Richtung in der Schiebehülse 1 festgelegt ist. In der anderen axialen Richtung wird der Ausrückhebel in der Aufnahme 17 des Halteteils 15 durch elastisch nachgiebige Haltenasen 23 fixiert, die an den einander abgewandten Grundflächen 24 der Bodenteile 18 angeordnet sind. Das Halteteil 15 ist z. B. aus einem Band gebogen und an den Enden verschweißt.

Der Abstand A zwischen den einander abgewandten Grundflächen 24 der Bodenteile 18 des Halteteils 15 ist geringfügig größer ausgeführt als der mittlere Durchmesser des Wulstes 11 der Schiebehülse 1, damit die Grundflächen 24 des Halteteils 15 in radialer Richtung aus den bis zum mittleren Durchmesser des Wulstes reichenden Öffnungen 12 herausragen und keine Schwierigkeiten beim Einfädeln des Ausrückhebels in die Aufnahmen 17 des Halteteils 15 auftreten können.

Diese beschriebene Ausführungsform stellt nur ein Beispiel eines erfindungsgemäßen Kupplungsausrückers dar. Änderungen in der Konstruktion sind im Rahmen der Erfindung ohne weiteres möglich. So kann das eingesetzte Halteteil 15 nicht nur aus einem Blechband gebogen, sondern z. B. auch aus Kunststoff gespritzt werden.

## Patentansprüche

1. Kupplungsausrücker, insbesondere für Kraftfahrzeugkupplungen, bei dem das Kupplungsdrucklager (2) mit radialem Spiel auf einer Schiebehülse (1) angeordnet ist, wobei der feststehende Lagerring (4) an einem Flansch (8) der Schiebehülse (1) anliegt und durch separate Mittel mit der Schiebehülse (1) verbunden ist, dadurch gekennzeichnet, daß die Schiebehülse (1) in an sich bekannter Weise auf der der Kupplung abgewandten Seite mit einem axial verlaufenden Wulst (11) versehen ist, der am Mantel mindestens zwei diametral gegenüberliegend angeordnete Öffnungen (12) aufweist, die sich in axialer Richtung über die gesamte Breite des Wulstes erstrecken und radial bis zu seinem mittleren Durchmesser reichen, und daß ein auf dem Mantel (14) der Schiebehülse (1) angeordnetes kreisförmig ausgebildetes Halteteil (15) mindestens zwei diametral gegenüberliegend vorgesehene Ausbuchtungen (16) aufweist, die in die Öffnungen (12) der Schiebehülse (1) eingreifen und sich in Umfangsrichtung an den Seitenwänden (13) der Öffnungen (12) abstützen, wobei die Ausbuchtungen (16) im mittleren Bereich mit jeweils einer Aufnahme (17) für den Ausrückhebel versehen sind, deren parallel zueinander verlaufende Bodenteile (18) und Seitenwände (19) durch Stege (20) mit dem Halteteil (15) verbunden sind.

2. Kupplungsausrücker nach Anspruch 1, dadurch gekennzeichnet, daß der Abstand A zwischen den einander abgewandten Grundflächen (24) der Bodenteile (18) des Halteteils (15) geringfügig größer ist als der mittlere Durchmesser des Wulstes (11) der Schiebehülse (1).

3. Kupplungsausrücker nach einem der Ansprüche 1 oder 2, dadurch gekennzeichnet, daß das Halteteil (15) im Bereich der Ausbuchtungen (16) jeweils eine Ausnehmung (21) aufweist, in die ein Schenkel (22) der U-förmigen Halteklammer (9) zur Befestigung des Kupplungsdrucklagers (2) an der Schiebehülse (1) eingreift.

4. Kupplungsausrücker nach einem der Ansprüche 1 bis 3, dadurch gekennzeichnet, daß die Bodenteile (18) an den einander abgewandten Grundflächen (24) jeweils eine Haltenase (23) aufweisen.

## Claims

1. Clutch release unit, particularly for automotive clutches, where the clutch release bearing (2) is mounted with radial clearance on a sliding sleeve (1), the stationary bearing ring (4) abutting a flange (8) of the sliding sleeve (1) and being joined to the sliding sleeve (1) by separate means, characterized in that the sliding sleeve (1) on the opposite side of the clutch is provided in a manner known as such with a bulge (11) extending in axial direction, this bulge having at its outside diameter at least two openings (12) diametrically opposite each other extending in axial direction across the whole width of the bulge and in radial direction up to its diameter in the centre, and in that a circular locating element (15) is arranged at the outside diameter (14) of the sliding sleeve (1), this locating element having at least two projections (16) diametrically opposite each other which engage in the openings (12) of the sliding sleeve (1) and are supported in circumferential direction by the side walls (13) of the openings (12), the projections (16) being provided in their central portion with one seat (17) each for the clutch release lever, the bottom parts (18) and side walls (19) of this seat in parallel with each other being joined to the locating element (15) by means of bars (20).

2. Clutch release unit as claimed in claim 1, characterized in that the distance A between the basal planes (24), turned away from each other, of the bottom parts (18) of the locating element (15) are slightly larger than the diameter in the centre of the bulge (11) of the sliding sleeve (1).

3. Clutch release unit as claimed in either of the claims 1 or 2, characterized in that the locating element (15), within the range of the projections (16), is provided with one recess (21) each accommodating a leg (22) of the U-shaped retaining clamp (9) in order to fasten the clutch release bearing (2) to the sliding sleeve (1).

4. Clutch release unit as claimed in either of the claims 1 to 3, characterized in that the bottom parts (18) have one stop (23) each at the basal planes (24) turned away from each other.

## Revendications

1. Dispositif d'embrayage, notamment pour embrayages automobiles, dans lequel la butée d'embrayage (2) est disposée avec jeu radial sur une douille coulissante (1), la bague de palier fixe (4) s'appliquant contre une bride (8) de la douille coulissante (1) et étant fixée sur celle-ci par des moyens à part, caractérisé par le fait que la douille coulissante (1) est munie d'une manière connue en soi d'un bourrelet (11) s'étendant en direction axiale et disposé du côté opposé de l'embrayage, ce bourrelet ayant sur son diamètre extérieur au moins deux ouvertures (12) diamétralement opposées, s'étendant axialement sur toute la largeur du bourrelet et s'étendant radialement jusqu'au diamètre au centre de celui-ci, et caractérisé par le fait qu'un organe de retenue (15) en forme circulaire disposé sur le diamètre extérieur (14) de la douille coulissante (1) est pourvu d'au moins deux saillies (16) diamétralement opposées qui s'engagent dans les ouvertures (12) et qui s'appliquent dans le sens circonférentiel contre les parois latérales (13) des ouvertures (12), les saillies (16) ayant dans leur zone centrale un logement (17) chacun pour le levier d'embrayage, logement dont les parties de fond (18) et parois latérales (19) disposées parallèlement sont reliées par des barrettes (20) avec l'organe de retenue (15).

2. Dispositif d'embrayage selon la revendication 1, caractérisé par le fait que la distance A entre les surfaces de base (24), détournées l'une de l'autre, des parties de fond (18) de l'organe de retenue (15) sont légèrement plus larges que le diamètre au centre du bourrelet (11) de la douille coulissante (1).

3. Dispositif d'embrayage selon l'une quelconque des revendications 1 ou 2, caractérisé par le fait que l'organe de retenue (15) est pourvu, dans la zone dessaillies (16), d'un dégagement (21) chacun dans lesquels s'engage un bras (22) de l'agrafe de maintien (9) en forme d'un U pour arrêter la butée d'embrayage (2) sur la douille coulissante (1).

4. Dispositif d'embrayage selon l'une quelconque des revendications 1 à 3, caractérisé par le fait que les parties de fond (18) ont un nez d'arrêt (23) chacun sur les surfaces de base (24) détournées l'une de l'autre.

Fig.1

Fig. 2

B

A

15   17

12

Fig. 3

13   12   13

Fig. 4

Fig. 5

Fig. 6